(19) Europäisches Patentamt
European Patent Office
Office européen des brevets

(11) Numéro de publication: **0 275 219 B1**

(12) **FASCICULE DE BREVET EUROPEEN**

(45) Date de publication de fascicule du brevet: **02.12.92** (51) Int. Cl.[5]: **G02F 1/37**

(21) Numéro de dépôt: **88400012.6**

(22) Date de dépôt: **05.01.88**

# (54) Films de Langmuir- Blodgett utilisables en optique non linéaire.

(30) Priorité: **09.01.87 FR 8700164**

(43) Date de publication de la demande:
**20.07.88 Bulletin 88/29**

(45) Mention de la délivrance du brevet:
**02.12.92 Bulletin 92/49**

(84) Etats contractants désignés:
**DE GB NL**

(56) Documents cités:

**ISAF '86, PROCEEDINGS OF THE 6TH IEEE INTERNATIONAL SYMPOSIUM ON APPLICATIONS OF FERROELECTRICS, 1986, pages 89-92, IEEE, New York, US; D.B. NEAL et al.: "Langmuir-blodgett films for nonlinear optics"**

(73) Titulaire: **THOMSON-CSF**
**51, Esplanade du Général de Gaulle**
**F-92800 Puteaux(FR)**

(72) Inventeur: **Robin, Philippe**
**THOMSON-CSF SCPI 19, avenue de Messine**
**F-75008 Paris(FR)**
Inventeur: **Chastaing, Evelyne**
**THOMSON-CSF SCPI 19, avenue de Messine**
**F-75008 Paris(FR)**
Inventeur: **Pocholle, Jean-Paul**
**THOMSON-CSF SCPI 19, avenue de Messine**
**F-75008 Paris(FR)**
Inventeur: **Raffy, Jean**
**THOMSON-CSF SCPI 19, avenue de Messine**
**F-75008 Paris(FR)**

(74) Mandataire: **Turlèque, Clotilde et al**
**THOMSON-CSF SCPI**
**F-92045 PARIS LA DEFENSE CEDEX 67(FR)**

**EP 0 275 219 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention se rapporte aux films de Langmuir-Blodgett et plus particulièrement à ceux susceptibles de trouver une application en optique non linéaire.

La méthode de Langmuir-Blodgett permet d'obtenir à la surface d'un liquide des couches monomoléculaires organisées de très faible épaisseur (de 10 à 40 angströms), de les transférer et de les superposer sur un substrat. Les possibilités d'applications de ces films dérivent des caractéristiques suivantes : simplicité du procédé d'élaboration, très grande précision des épaisseurs obtenues (quelques angströms), orientation des molécules, propriétés physiques ajustables.

Dans le domaine de l'optique non linéaire, la propriété physique que l'on cherche à exploiter est la susceptibilité non linéaire d'ordre 2 ou 3. Ainsi, pour la génération d'onde de seconde harmonique, les films de Langmuir-Blodgett intéressants sont alors ceux qui possèdent une structure non-centrosymétrique. De telles structures sont déjà connues. Elles sont classées suivant l'orientation imposée aux molécules des différentes couches monomoléculaires formant les films. On peut ainsi élaborer des films formés de couches de type X ou Z, c'est-à-dire où toutes les molécules sont disposées dans le même sens. On peut encore élaborer des films formés de couches de type A, B, A, B, c'est-à-dire où des couches sont formées de molécules A et d'autres de molécules B, les différentes couches étant alternées. Le fait remarquable de ces structures est qu'elles conduisent à des films dont l'axe de maximum d'hyperpolarisabilité est perpendiculaire au substrat. Ceci entraîne qu'une onde lumineuse arrivant perpendiculairement au substrat (le champ électrique associé étant donc parallèle au substrat) n'a pas d'intéraction avec ces films. Par exemple, dans une expérience de génération de seconde harmonique, l'amplitude de l'onde générée à $2\omega$ dans une direction perpendiculaire au plan du substrat est nulle. Or, dans de nombreuses applications de ces films de Langmuir-Blodgett, on a besoin d'obtenir la génération de seconde harmonique dans une direction perpendiculaire au substrat.

Neal, Petty et al. (ISAF'86 Proceedings of the 6th IEEE international symposium on applications of ferroelectrics, 1986, pages 89-92) ont mis en évidence l'association de molécules d'au moins deux types différents dans un film de Langmuir-Blodgett, permettant de résoudre ce problème.

On a trouvé selon l'invention qu'il serait très avantageux d'utiliser de tels films pour réaliser un corrélateur optique.

L'invention propose d'utiliser des films élaborés par la méthode de Langmuir-Blodgett et formés d'au moins une couche composée d'un mélange de molécules, le mélange étant choisi de façon à obtenir les propriétés désirées. En mélangeant des molécules de natures différentes, on permet à certaines d'entre elles d'adopter une conformation et un arrangement différents de ce qu'elles adopteraient si elles étaient utilisées seules.

L'invention a donc pour objet un corrélateur optique comprenant un guide d'onde optique inscrit dans un substrat et s'étendant le long de sa surface, des moyens pour introduire dans le guide deux ondes excitatrices à impulsions et traversant le guide optique en sens inverse, et caractérisé en ce qu'un film de Langmuir-Blodgett est déposé sur le guide optique, ledit film comprenant au moins une couche de molécules amphiphiles, ces molécules sont au moins de deux types différents, un premier type de molécules (A) étant actives en optique non linéaire et un second type de molécules (B) pouvant être inertes ou actives en optique non linéaire, le film engendrant une onde optique de seconde harmonique perpendiculairement au substrat.

L'invention sera mieux comprise et d'autres avantages apparaîtront au moyen de la description qui va suivre, donnée à titre non limitatif, et des dessins annexés parmi lesquels :

- les figures 1 à 3 représentent schématiquement des structures de films de Langmuir-Blodgett selon l'art connu ;
- les figures 4 et 5 représentent des molécules utilisables pour réaliser des films employés dans le corrélateur ;
- la figure 6 est un diagramme représentant la valeur d'un signal de génération de seconde harmonique en fonction de la composition d'un film employé dans un corrélateur selon l'invention ;
- la figure 7 illustre un exemple d'application des films utilisés dans un corrélateur selon l'invention.

Les films de Langmuir-Blodgett sont obtenus à partir de molécules amphiphiles. Ces molécules sont allongées et présentent à l'une de leur extrémités un groupe hydrophile et à l'autre extrémité un groupe hydrophobe. Les molécules amphiphiles les plus simples sont les acides gras $CH_3 - (CH_2)_n - COOH$ qui sont constitués d'une tête polaire -COOH hydrophile et d'une chaîne aliphatique hydrophobe $CH_3 - (CH_2)_n$ -. L'acide béhénique $CH_3 - (CH_2)_{20} - COOH$ est une des molécules les plus couramment utilisées.

Des films possédant une structure non-centrosymétrique, selon l'art connu, sont représentés sur les figures 1 à 3. Sur ces figures, les molécules amphiphiles sont représentées sous forme d'épingles dont les têtes représentent le côté hydrophile de la molécule. La figure 1 représente un film de type Z formé de trois couches de molécules déposées sur un substrat 1. La figure 2 représente un film de type X formé de trois couches de molécules déposées sur un substrat 2. La figure 3 représente un film possédant une structure A, B, A, B et formé de quatre couches de molécules déposées sur un substrat 3. Ces molécules sont de deux types différents : molécules A figurées avec des têtes hydrophiles blanches et molécules B figurées avec des têtes hydrophiles noires. On peut ainsi former des couches alternées comme représenté à la figure 3.

Ces films de l'art connu ne permettant pas la génération d'une seconde harmonique dans une direction perpendiculaire au substrat, l'invention propose d'utiliser des films proposé par IEEE pour une structure particulière de corrélateur. Le corrélateur selon l'invention peut comprendre une seule couche de molécules déposée sur un susbrat, mais il peut aussi en comporter plusieurs. Chaque couche est formée à partir d'un mélange de molécules amphiphiles d'au moins deux types différents. L'arrangement des molécules entre elles n'a pas été spécialement étudié. Ce sont leurs propriétés qui ont été exploitées dans le cadre de la présente invention. Les proportions relatives des différentes molécules peuvent être calculées pour que le film ait un maximum d'efficacité dans son utilisation.

Dans la partie de description qui va suivre, on va décrire l'obtention d'un film utilisé dans l'invention. Les produits de départ sont constitués par des molécules A actives en optique non linéaire et par des molécules B inertes ou non. Ces deux types de molécules doivent être amphiphiles pour pouvoir être traitées par la méthode de Langmuir-Blodgett. Les molécules A et B sont mises en solution dans un solvant commun. Quelques gouttes de cette solution sont déposées sur la surface d'eau d'une cuve de dépôt de couches selon la méthode de Langmuir-Blodgett. Après un temps d'évaporation du solvant, les molécules sont compressées jusqu'à obtenir un film stable et compact. Ce film superficiel est ensuite transféré et superposé sur le substrat. Le signal de génération de seconde harmonique généré par un film obtenu de cette façon peut étre important pour une direction d'émergence perpendiculaire au substrat. Les résultats seront fonction des molécules utilisées et de leur concentration respective.

A titre d'exemple, la molécule active A est représentée à la figure 4. Cette molécule a été récemment synthétisée par la société anglaise Imperial Chemical Industries. Elle comprend une tête hydrophile formée par le groupe -COOH et une extrémité hydrophobe due à la présence du groupe $-C_nH_{2n+1}$. La molécule B peut être l'acide béhénique, inerte en génération de seconde harmonique, et représentée à la figure 5. Ce peut être aussi une autre molécule de la série des acides gras tel que l'acide stéarique. Le solvant utilisé peut être du chloroforme.

Les proportions relatives des deux types de molécules ont une importance particulière pour l'efficacité du film. Le diagramme de la figure 6 démontre clairement l'avantage procuré par un mélange correctement déterminé. Ce diagramme montre l'évolution du signal S (en mV) de génération de seconde harmonique pour une onde excitatrice d'amplitude constante et dirigée vers le film avec 0° d'angle d'incidence, en fonction du pourcentage en moles d'acide béhénique dans le mélange et pour n = 12 dans le cas de la molécule A. Le signal S a été obtenu à partir d'un photodétecteur. La courbe de ce diagramme montre toute l'importance du mélange et des proportions relatives des composants du mélange. En effet, le produit actif pur donne une réponse égale à 10mV tandis que pour un mélange comprenant 40 % d'acide béhénique la réponse obtenue vaut 200 mV. Ce résultat est remarquable et paraît surprenant puisque le mélange d'un produit actif avec un produit inerte donne de bien meilleurs résultats que le produit actif employé seul.

L'exemple ci-dessus fait référence à deux types de molécules distinctes, mais on peut concevoir des films de Langmuir-Blodgett réalisés à partir de plusieurs molécules actives ou inertes. De même, on peut concevoir des films comprenant plusieurs couches avec toutes les combinaisons possibles pour reproduire les structures décrites dans les figures 1 à 3.

Le film selon l'invention peut être utilisé dans un corrélateur optique selon l'invention tel que celui représenté à la figure 7. Ce corrélateur a été élaboré à partir d'un substrat 5, par exemple en verre, de longueur $\underline{1}$ déterminée en fonction des caractéristiques du corrélateur. Par masquage, on fait diffuser des ions sodium par exemple pour obtenir une région 6 d'indice de réfraction supérieur à celui du substrat. On dépose ensuite un film de Langmuir-Blodgett sur la face supérieure du substrat représenté à la figure 7. Ce film a été figuré en moucheté sur la figure. La région 6 forme un guide d'onde. Deux ondes optiques de pulsation $\omega$ abordant le guide d'onde ainsi créé de la façon indiquée sur la figure 7 peuvent ainsi générer une onde optique de seconde harmonique rayonnant perpendiculairement au substrat.

## Revendications

1. Corrélateur optique comprenant un guide optique (G) inscrit dans un substrat et s'étendant le long de sa surface, des moyens pour introduire dans le guide deux ondes excitatrices à impulsions et traversant le guide optique en sens inverse, caractérisé en ce qu'un film de

Langmuir-Blodgett est déposé sur le guide optique, ledit film comprenant au moins une couche de molécules amphiphiles, ces molécules sont au moins de deux types différents, un premier type de molécules (A) étant actives en optique non linéaire et un second type de molécules (B) pouvant être inertes ou actives en optique non linéaire, ledit film engendrant une onde optique de seconde harmonique rayonnant perpendiculairement au substrat.

**2.** Corrélateur optique selon la revendication 1, caractérisé en ce que ledit second type de molécules comprend des molécules de la série des acides gras.

**3.** Corrélateur optique selon la revendication 2, caractérisé en ce que ledit second type de molécules comprend des molécules d'acide béhénique.

**4.** Corrélateur optique selon la revendication 2, caractérisé en ce que ledit second type de molécules comprend des molécules d'acide stéarique.

**5.** Corrélateur optique selon l'une quelconque des revendications 1 à 4, caractérisé en ce que ledit premier type de molécules comprend des molécules de type :

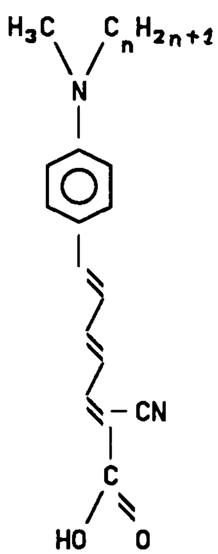

**6.** Corrélateur optique selon la revendication 5, caractérisé en ce que le nombre n est égal à 12.

**Claims**

**1.** An optical correlator comprising an optical guide (G) inscribed on a substrate and extending along its surface, means for introducing into the guide two pulse-type exciting waves passing through the optical guide in the opposite direction, characterised in that a Langmuir-Blodgett film is deposited on the optical guide, said film comprising at least one layer of amphiphilic molecules, these molecules are of at least two different types, a first type of molecules (A) being active in non-linear optics and a second type of molecules (B) capable of being inert or active in non-linear optics, said film generating a second harmonic optical wave radiating perpendicularly to the substrate.

**2.** An optical correlator according to Claim 1, characterised in that said second type of molecules comprises molecules in the fatty acids series.

**3.** An optical correlator according to Claim 2, characterised in that said second type of molecules comprises molecules of behenic acid.

**4.** An optical correlator according to Claim 2, characterised in that said second type of molecules comprises molecules of stearic acid.

**5.** An optical correlator according to any one of Claims 1 to 4, characterised in that said first type of molecules comprises molecules of the type:

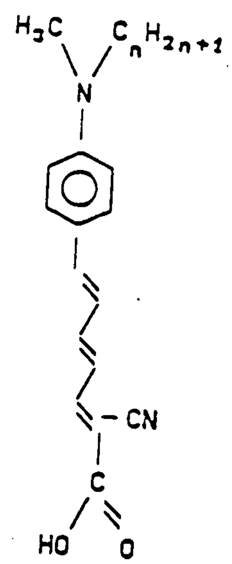

**6.** A optical correlator according to Claim 5, characterised in that the number n is equal to 12.

**Patentansprüche**

1. Optischer Korrelator mit einem optischen Wellenleiter (G), der in ein Substrat integriert ist und sich entlang von dessen Oberfläche erstreckt, mit Mitteln, um in den Wellenleiter zwei impulsförmige Erregerwellen einzuführen, die den Wellenleiter in entgegengesetzter Richtung durchqueren, dadurch gekennzeichnet, daß eine Langmuir-Blodgett-Folie auf den Wellenleiter aufgebracht wird, die mindestens eine Schicht aus amphiphilen Molekülen besitzt, wobei diese Moleküle mindestens zwei verschiedenen Typen angehören, von denen ein erster Molekültyp (A) in der nicht-linearen Optik aktiv ist und ein zweiter Molekültyp (B) in der nicht-linearen Optik inert oder aktiv sein kann, wobei diese Folie eine optische Welle der zweiten Harmonischen senkrecht zum Substrat erzeugt.

2. Optischer Korrelator nach Anspruch 1, dadurch gekennzeichnet, daß die zweite Molekülart Moleküle aus der Gruppe von Fettsäuren enthält.

3. Optischer Korrelator nach Anspruch 2, dadurch gekennzeichnet, daß die zweite Art von Molekülen Moleküle der behenischen Säure enthält.

4. Optischer Korrelator nach Anspruch 2, dadurch gekennzeichnet, daß die zweite Art von Molekülen Moleküle der Stearinsäure enthält.

5. Optischer Korrelator nach einem beliebigen der Ansprüche 1 bis 4, dadurch gekennzeichnet, daß die erste Art von Molekülen Moleküle der folgenden Struktur enthält:

6. Optischer Korrelator nach Anspruch 5, dadurch gekennzeichnet, daß n den Wert 12 hat.

FIG_1

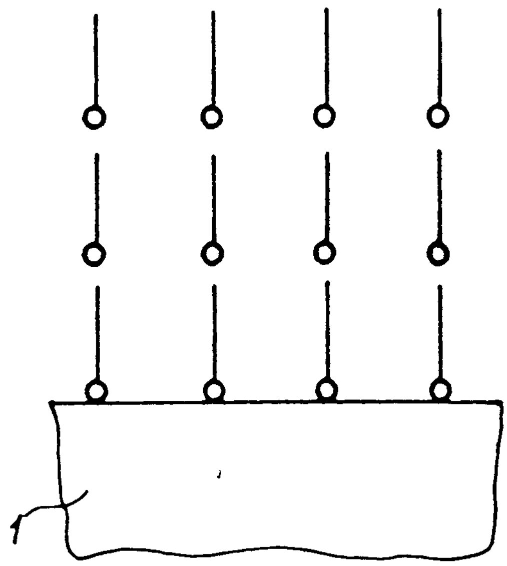


FIG_2

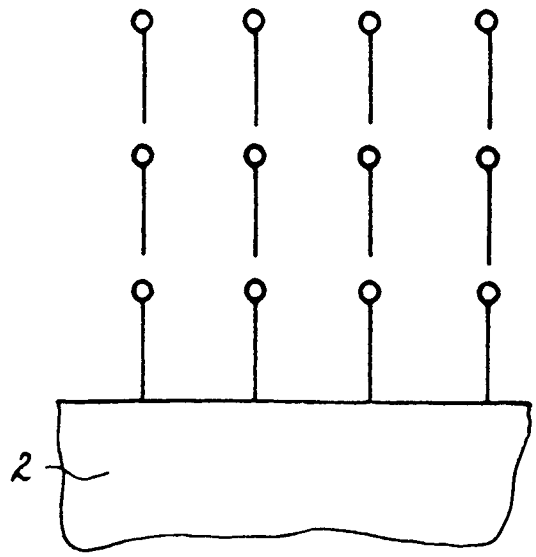


FIG_3

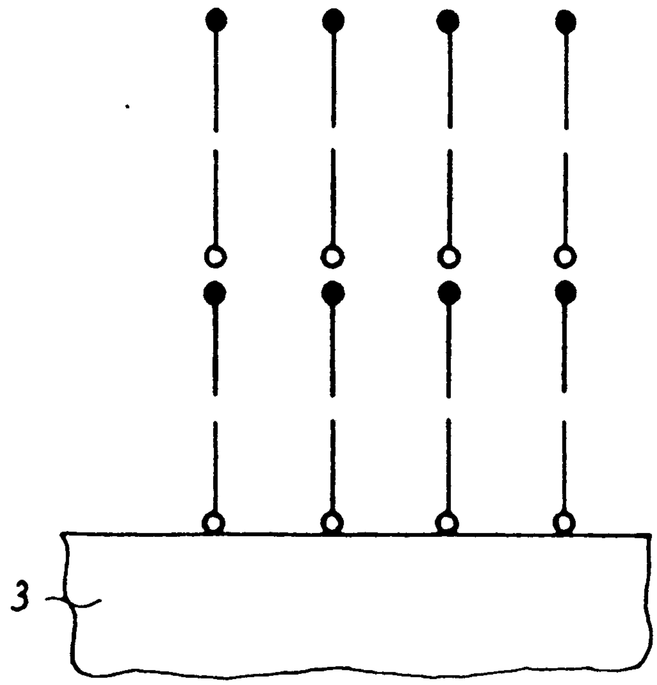

FIG_4

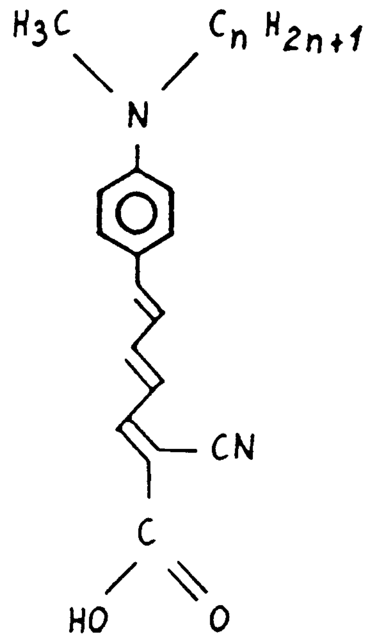

FIG_5

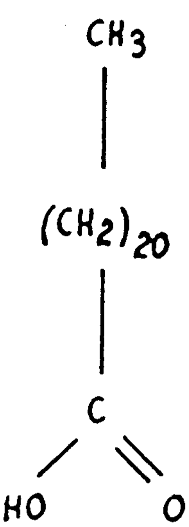

FIG_6

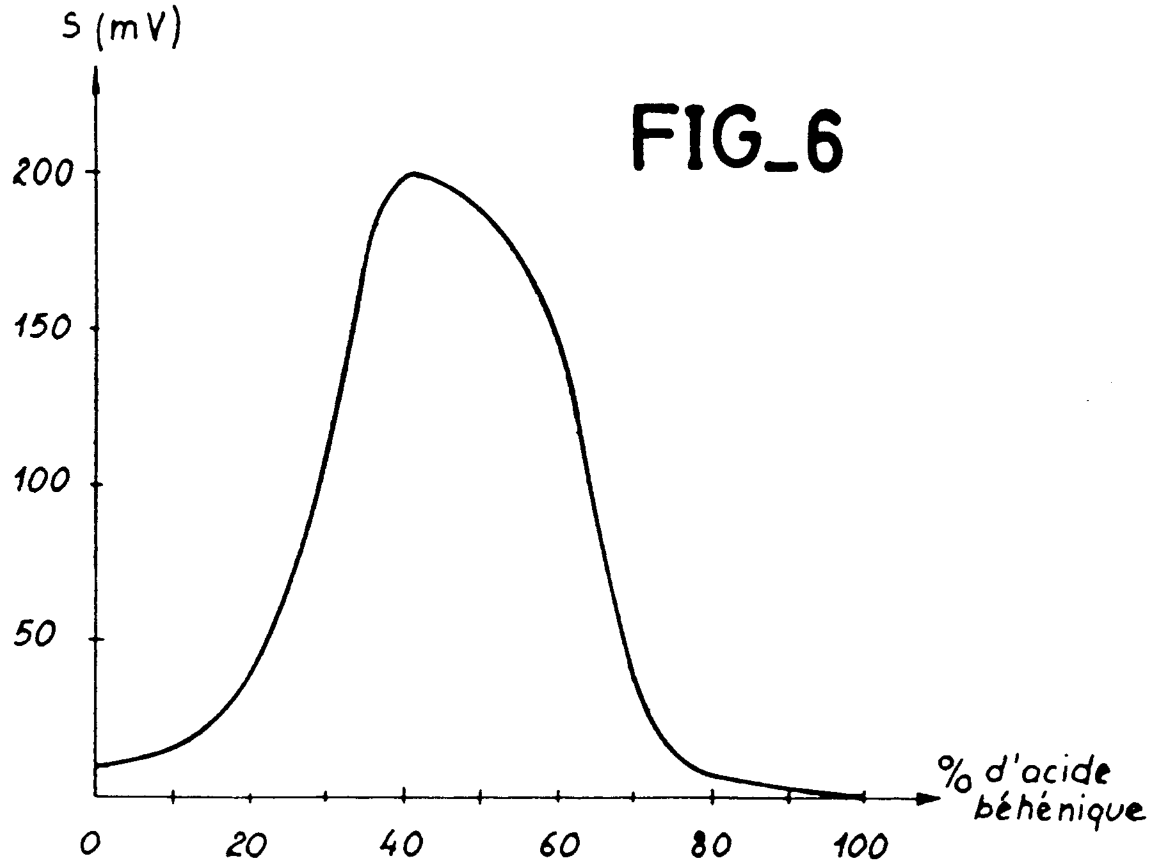
S (mV)
200
150
100
50
0
20
40
60
80
100
% d'acide béhénique

FIG_7

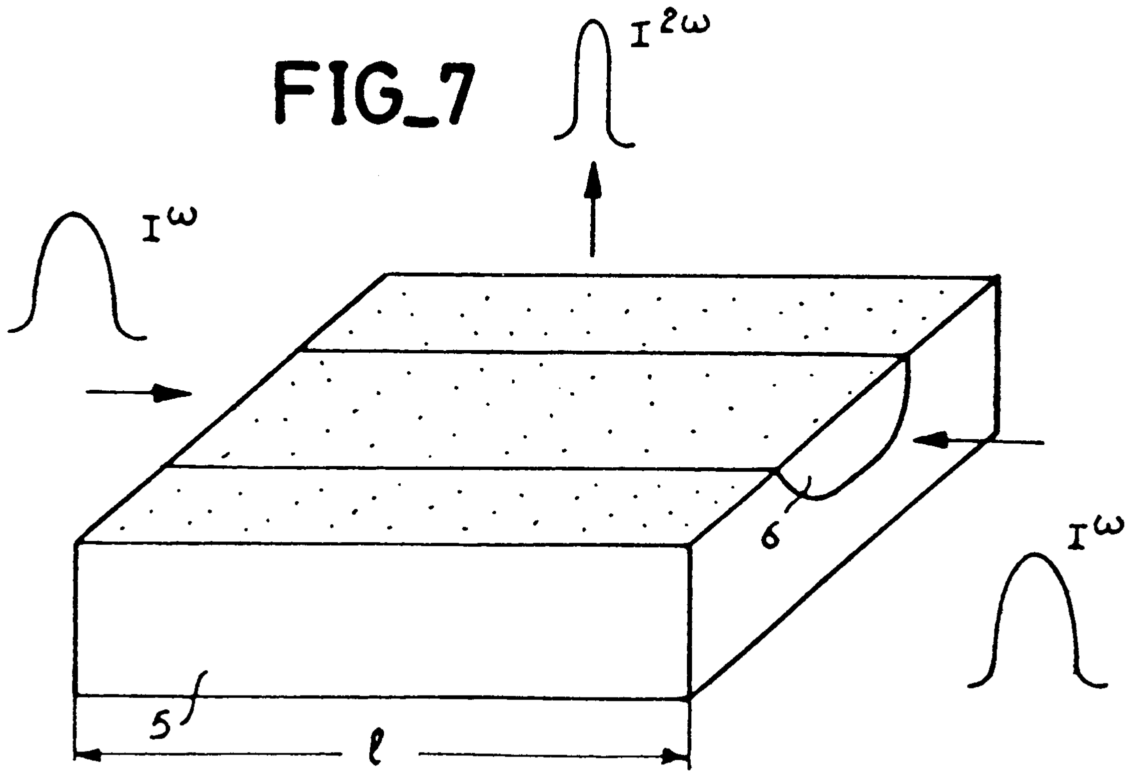
I^2ω
I^ω
I^ω
6
5
ℓ